# EUROPÄISCHE PATENTSCHRIFT

(11) **EP 0 613 398 B1**
(45) Veröffentlichungstag und Bekanntmachung des Hinweises auf die Patenterteilung: **04.06.1997**
(21) Anmeldenummer: 92923151.2
(22) Anmeldetag: 13.11.1992
(51) Int. Cl.: B01D 61/44, B01D 61/52, C23F 1/46, C23G 1/36, C25D 21/18, C25F 7/02

(54) **VERFAHREN, MITTEL UND VORRICHTUNG ZUM ELEKTRODIALYTISCHEN REGENERIEREN DES ELEKTROLYTEN EINES GALVANISCHEN BADES ODER DERGL.**
PROCESS, MEDIUM AND DEVICE FOR ELECTRODIALYTICALLY REGENERATING THE ELECTROLYTE OF A GALVANIC BATH OR THE LIKE
PROCEDE, MILIEU ET DISPOSITIF DE REGENERATION ELECTRODIALYTIQUE DE L'ELECTROLYTE D'UN BAIN GALVANIQUE OU SIMILAIRE

(30) Priorität: 13.11.1991 DE 4137377
(43) Veröffentlichungstag der Anmeldung: 07.09.1994
(73) Patentinhaber: FIRMA RUDOLF JATZKE, D-33689 Bielefeld (DE)
(72) Erfinder: RISCH, Nikolaus, D-Lemgo-Lieme (DE); HOHBERG, Thomas, D-4800 Bielefeld 1 (DE); HOLTHÖFER, Günther, D-4800 Bielefeld 14 (DE); WICKBOLD, Klaus, D-4800 Bielefeld 1 (DE)
(74) Vertreter: Schumacher, Horst, Dr. Dipl.-Phys.
(86) Internationale Anmeldenummer: EP9202609
(87) Internationale Veröffentlichungsnummer: WO9309865

(56) Entgegenhaltungen:
- GB-A- 2 094 351
- US-A- 3 481 851
- US-A- 3 909 381
- US-A- 4 229 280

## Beschreibung

Die Erfindung betrifft ein Verfahren, ein Mittel und eine Vorrichtung zum elektrodialytischen Regenerieren des Elektrolyten eines, insbesondere galvanischen, Bades gemäß den Oberbegriffen der Patentansprüche 1, 6, 8 und 9.

Um beim Regenerieren des Elektrolyten eines solchen Bades möglichst wenig oder kein aufzubereitendes Spülwasser oder verunreinigtes Abwasser zu erhalten, ist die Verwendung einer Elektrodialyseanlage vorgeschlagen worden (Taschenbuch der Abwasserbehandlung für die metallverarbeitende Industrie, Band 2, Carl Hanser Verlag München Wien 1977, Seite 170 ff.). Hierbei wird der Elektrolyt des Bades (Prozeßelektrolyt) in ständigem Umlauf zwischen dem Bad und einer Dialysezelle gehalten. Bei den bisherigen Untersuchungen zu diesem Prozeß hat sich gezeigt, daß sowohl die Gewinnung des beim Regenerationsprozeß anfallenden Konzentrates der das Bad verunreinigenden Stoffe, als auch die Qualität des Prozeßelektrolyten keinesfalls zufriedenstellend sind, denn einerseits neigen die in der Elektrodialysezelle dem Prozeßelektrolyten entzogenen Fremdionen dazu, im Hilfselektrolyten in Schwebe zu bleiben oder als Schlamm auszufallen und, andererseits, gefährdet die durch Membranselektivitäten von unter 100 % unvermeidliche Wanderung von Bestandteilen des Hilfselektrolyten in den Prozeßelektrolyten dessen Qualität in einer Weise, die nach einiger Zeit ein Auswechseln des Prozeßelektrolyten erzwingen.

Die US-A-3,481,851 beschreibt ein Verfahren zur elektrodialytischen Regenerierung und eine Vorrichtung zur Durchführung dieses Verfahrens gemäß den Oberbegriffen der unabhängigen Ansprüche 1, 6, 8 und 9. Bei diesem bekannten Verfahren werden die durch eine permselektive Membran in den Hilfselektrolyten übergetretenen Metallionen, Metalle bzw. Metallverbindungen in Lösung gehalten oder sie setzen sich am Boden der Zelle ab, wo sie von Zeit zu Zeit abgezogen werden. Die im Katholyten in Lösung gehaltenen Metalle müssen aus dem Katholyten ausgefällt werden. In ähnlicher Weise arbeitet das Verfahren gemäß der US-A-3,909,381, bei dem es allerdings erforderlich ist, den Hilfselektrolyten in einem offenen Kreislauf zu führen, d. h. kontinuierlich durch frischen Elektrolyten zu ergänzen, wobei verbrauchter Elektrolyt abgezogen wird.

Schließlich ist es aus der US-A-4,229,280 bekannt, in das galvanische, den Prozeßelektrolyten enthaltende Bad eine Elektrodialysezelle einzuhängen und ständig frischen Hilfselektrolyten durch die Katholytkammer der Elektrodialysezelle im offenen Kreislauf zu leiten.

Davon ausgehend liegt der Erfindung die **Aufgabe** zugrunde, ein Verfahren, ein Mittel und eine Vorrichtung der eingangs genannten Art zu schaffen, welche es ermöglichen, den elektrodialytischen Regenerierungsprozeß langzeitstabil führen zu können.

Zur **Lösung** dieser Aufgabe wird ein Verfahren mit den Merkmalen des Anspruchs 1 oder 6, ein Mittel mit den Merkmalen des Anspruchs 8 sowie eine Vorrichtung mit den Merkmalen des Anspruchs 10 vorgeschlagen.

Dadurch, daß die erste, den Prozeßelektrolyten führende Kammer der Elektrodialysezelle in einem größerem Hilfselektrolytbad aufgenommen ist, in welchem der Hilfselektrolyt umgewälzt und durchmischt wird, wird das Niederschlagen der durch die Membran in das Hilfselektrolytbad aus dem Prozeßelektrolyten hineintretenden Fremd(metall)ionen auf den in dem Hilfselektrolytbad sich befindenden Elektroden der Gleichspannungsstromquelle erleichtert und die Gefahr eines Übertritts von Ionen aus dem Hilfselektrolyten in den Prozeßelektrolyten verringert.

Das Verfahren kann nun in verschiedener Hinsicht spürbar verbessert werden:

Wenn (nach Anspruch 2) als Hilfselektrolyt eine Carbonsäure verwendet wird, wird erreicht, daß in einem Störfall, bei dem größere Mengen des Hilfselektrolyten in den Prozeßelektrolyten gelangen können, z. B. bei einer Membranbeschädigung, der Prozeßelektrolyt nicht dauerhaft geschädigt wird und/oder ausgetauscht werden muß. In einem derartigen Störfall werden die als Hilfselektrolyt verwendeten Carbonsäuren im Prozeßelektrolyten innerhalb von wenigen Minuten durch Oxidation in unschädliche Bestandteile umgewandelt. Wenn, wie besonders bevorzugt, die Carbonsäure neben Sauerstoff keine weiteren Heteroatome enthält, wird sie in einem solchen Fall rückstandsfrei zu CO₂ und Wasser oxidiert. Grundsätzlich ist es bereits möglich, hierfür einbasige Monocarbonsäuren zu verwenden, also solche, die eine einzige Carboxylgruppe (COOH) enthalten. Besonders bevorzugt werden aber Polycarbonsäuren, die also zwei oder mehr Carboxylgruppen im Molekül enthalten, wie Oxal-, Malon-, Malein-, Fumar-, Bernstein-, Apfel-, Cavulin-, Wein-, Zitronen- oder Diglycolsäure. Es hat sich nämlich gezeigt, daß die Moleküle der Polycarbonsäuren nur sehr schlecht durch die Membran aus dem Hilfselektrolyten in den Prozeßelektrolyten transportiert werden, so daß eine hohe Selektivität, verbunden mit extrem niedrigem Chemikalienverbrauch erreicht wird. Weiterhin werden die trotz der durch Verwendung von Polycarbonsäuren erhöhten Membranselektivität noch durch die Membran in den Prozeßelektrolyten transportierten Säureanionen vollständig zu Kohlendioxid und Wasser oxidiert, so daß keine Auswirkungen auf den Prozeßelektrolyten festgestellt werden.

Die vorgeschlagenen Säuren sind toxikologisch unbedenklich. Der Dampfdruck der leicht dosierbaren Feststoffe ist sehr gering. Auftretende Aerosolbildung kann durch Netzmittel unterdrückt werden.

Um zu verhindern, daß die aus dem Prozeßelektrolyten in den Hilfselektrolyten transportierten Fremd(metall)ionen im Hilfselektrolyten in Schwebe bleiben oder als Schlamm dort anfallen, wird das Verfahren mit den Merkmalen des Anspruchs 3 vorgeschlagen. Hierdurch wird es möglich, die erwähnten Fremdmetallionen zum größten Teil auf der im Hilfselektrolyten befindlichen Elektrode der Gleichspannungsstromquelle niederzuschlagen und später von dessen Oberfläche in relativ reiner Form mechanisch zu gewinnen. Überraschenderweise hat sich gezeigt, daß eine Steigerung des pH-Wertes des Hilfselektrolyten (nach Anspruch 4) den Niederschlag der Fremdmetallionen auf der Elektrode in der Elektrodialysekammer mit dem Hilfselektrolyten fördert. Als besonders vorteilhaft haben sich pH-Werte um 5,0 erwiesen. Zu diesem Zweck wird dem in der Regel stark sauren Hilfselektrolyten ein entsprechendes Salz zugegeben; Kalium- oder Natriumhydroxid (KOH oder NaOH) haben sich hierfür - ebenso wie als Leitsalz nach Anspruch 3 - als besonders vorteilhaft erwiesen. Ganz besonders bevorzugt als Hilfselektrolyt werden Pufferlösungen aus KOH und Polycarbonsäuren, insbesondere Di- und Tricarbonsäuren. Das Kaliumhydroxid wird vorzugsweise in einem Molverhältnis von etwa 1 : 2, bezogen auf die vorhandenen Carbonsäuregruppen, zugesetzt. Die Erhöhung des pH-Wertes führt zu einer erhöhten Leitfähigkeit (niedrigere Stromkosten) und dazu, daß die aus dem Prozeßelektrolyten entfernten Verunreinigungen, insbesondere Fremdmetallionen, wenn sie nicht als metallische Abscheidung auf den Elektrodenblechen anfallen, als Hydroxidschlamm anfallen. Die Hydroxidfällung hat hierbei den Vorteil eines auf Dauer konstanten pH-Wertes. Bei der Erzeugung metallischer Abscheidungen, die problemlos zu recyclen sind, muß der pH-Wert intensiver überwacht und korrigiert werden.

Durch die vorgenannten Maßnahmen kommt es im Katholytkreislauf zu einem Metallionen-Gleichgewicht, die eine langzeitstabile Prozeßführung gestatten.

Es hat sich gezeigt, daß die Maßnahmen der Ansprüche 2 bis 4 bereits auch dann sich in dem erläuterten Sinne vorteilhaft auf die Langzeitstabilität des Katholytkreislaufes und/oder ein langzeitstabiles Reinigen des Bades (wobei "Reinigen" ebenfalls als ein "Regenerieren" im Sinne der Erfindung zu verstehen ist) auswirken bzw. sicherstellen, wenn das letzte Merkmal des Oberbegriffs und die Merkmale des Kennzeichens von Anspruch 1 nicht erfüllt sind.

Hinsichtlich der erfindungsgemäßen Mittel zum elektrodialytischen Reinigen des Elektrolyten eines Bades haben die nach Anspruch 8 vorgeschlagenen Stoffe die bereits im Zusammenhang mit dem Verfahren beschriebenen Auswirkungen und Vorteile.

Während die erfindungsmäßen Maßnahmen beim elektrodialytischen Reinigen der Elektrolyten von Bädern ganz allgemein also auch von Beizbädern und dergl. außerordentlich vorteilhaft sind, wird ihre Anwendung ganz besonders im Zusammenhang mit dem elektrolytischen Verchromen, insbesondere zum Regenerieren von Chromsäurelösungen und ganz besonders bevorzugt im Zusammenhang mit dem Hartverchromen.

Zweckmäßige Ausgestaltungen der Erfindung, die insbesondere eine hohe Regenerierungsleistung und/oder eine besonders problemlose Rückgewinnbarkeit der durch das Regenerieren anfallenden Verunreinigungen, insbesondere Metalle gewährleisten, sind in weiteren Ansprüchen enthalten.

Die vorgenannten, sowie die beanspruchten bzw. in den Ausführungsbeispielen beschriebenen, erfindungsgemäß zu verwendenden Verfahrensschritte, Mittel und Vorrichtungsbauteile unterliegen in ihrer Auswahl, insbesondere in ihrer Größe, Formgestaltung, Materialauswahl und technischen Konzeption bzw. Verfahrensbedingungen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Figuren, in der - beispielhaft - eine bevorzugte Ausführungsform einer erfindungsgemäßen Regenerierungsanlage dargestellt ist, anhand der auch ein praktisches Ausführungsbeispiel erläutert wird. In den Figuren zeigen:
- Fig. 1: ein Blockschaltbild für den gesamten Regenerierungsprozeß;
- Fig. 2: von dem Blockschaltbild nach Fig. 1 eine Detaildarstellung der ersten Kammer der Elektrodialysezelle im Vertikalschnitt, parallel zu den Membranen (Schnitt entlang der Linie II-II gemäß Fig. 3) sowie
- Fig. 3: dieselbe Kammer in einem um 90° verdrehten Vertikalschnitt (Schnitt entlang der Linie III-III gemäß Fig. 2).

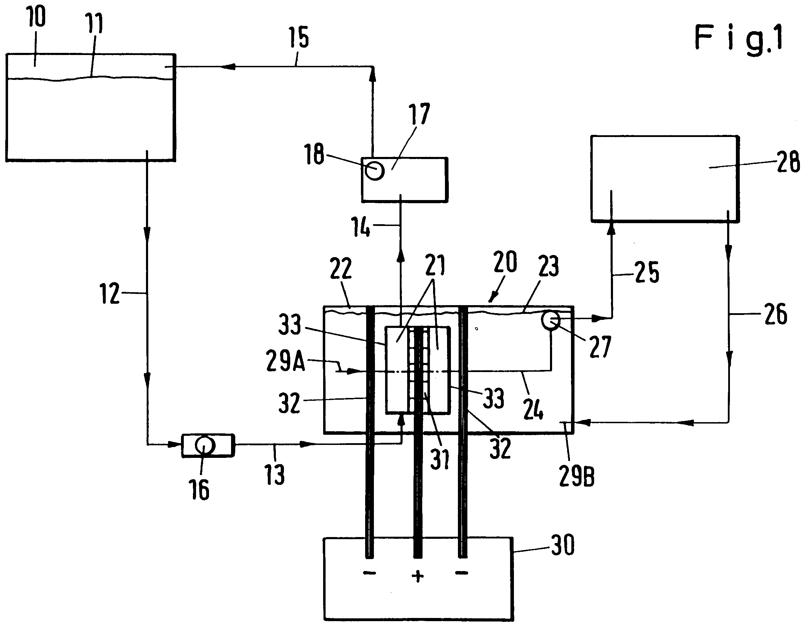

Gemäß Fig. 1 wird einem einen Prozeßelektrolyten 11 enthaltenden Bad 10 über Rohrleitungen 12, 13, 14 und 15 unter Zwischenschaltung einer ersten Pumpe 16 und einer in einem Sammelbehälter 17 vorgesehenen zweiten Pumpe 18 sowie einer (ersten) Kammer 21 einer Elektrodialysezelle 20 der Prozeßelektrolyt 11 im Kreislauf entzogen und wieder zugeführt.

Die Elektrodialysezelle 20 besteht im Kern aus der ersten Kammer 21 sowie einer, einen Hilfselektrolyten 23 aufnehmenden, als Bad gestalteten zweiten Kammer 22, in welches die erste Kammer 21 vollständig eingetaucht ist. Der Hilfselektrolyt 23 wird über die Rohrleitungen 24, 25 und 26, von denen letztere als Gefälleleitung verlegt ist, unter Zwischenschaltung einer (dritten) Pumpe 27 und einer Bandfilteranlage 28 sowie der zweiten Kammer 22 ebenfalls im Kreislauf geführt, wobei die Einströmmündung 29A und die Ausströmmündung 29B des Hilfselektrolyten 23 in der zweiten Kammer 22 so angeordnet sind, daß in der zweiten Kammer 22 eine ausgeprägte Badumwälzung und Durchmischung gewährleistet ist. Als Bandfilteranlage 28 wurde eine solche der Firma Faudi Feinbau GmbH, 6370 Oberursel (Type 10/80) verwendet.

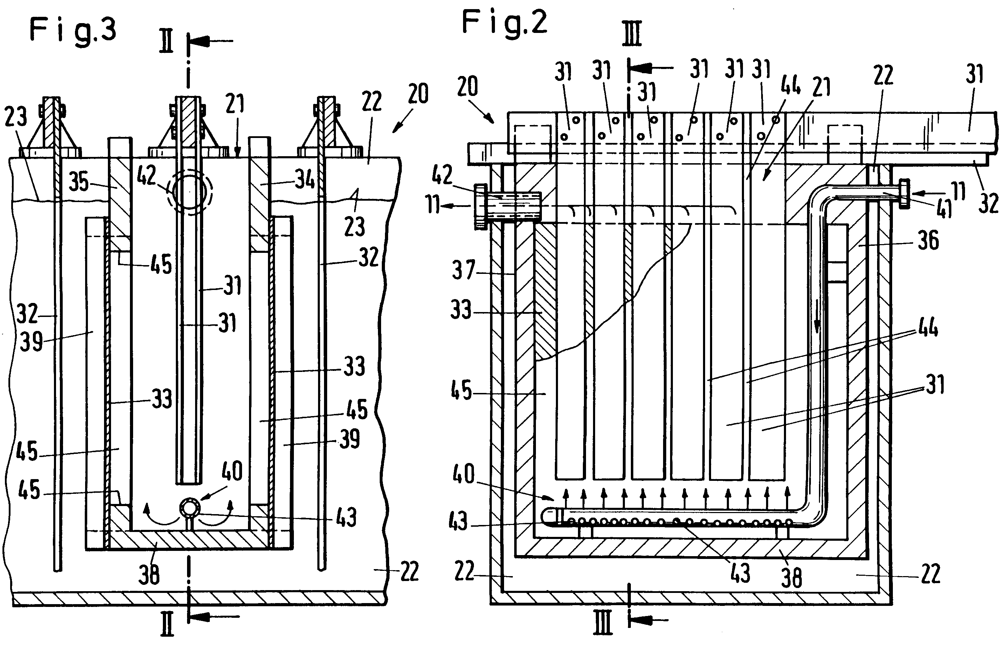

Da es für den Prozeß gleich bleibt, ob das Bad 10 mit Strom oder stromlos betrieben wird, ist dieses Detail nicht näher ausgeführt. Erfindungswesentlich ist hingegen die Gleichstromversorgung der Elektrodialysezelle 20. Hierzu dient eine Gleichspannungsstromquelle 30, deren Elektroden 31 und 32 in die Elektrodialysezelle in die erste bzw. zweite Kammer 21 bzw. 22 und die dort befindlichen Elektrolytflüssigkeiten (Prozeßelektrolyt 11, Hilfselektrolyt 23) eintauchen. Dies ist in dem Blockschaltbild lediglich anschauungshalber schematisch dargestellt. Die Details ergeben sich aus den Fig. 2 und 3. Bei dem gewählten Ausführungsbeispiel dient die in die erste Kammer 21 eintauchende Elektrode 31 als Anode und die in die beiden in die zweite Kammer 22 eingetauchten Elektroden 32 als Kathoden.

Innerhalb der Elektrodialysezelle 20 sind der Prozeßelektrolyt 11 und Hilfselektrolyt 23 durch zwei parallel einander gegenüberliegende teildurchlässige permselektive (kationendurchlässige) Membranen 33 (Hersteller: Fa. DUPONT) voneinander getrennt.

Wie aus Fig. 2 und 3 ersichtlich, sind die Elektroden 31 und 32 in der Praxis vorzugsweise von oben in die Elektrodialysezelle 20 eingetaucht. Es versteht sich, daß die Zeichnungen der Übersichtlichkeit halber nicht maßstabskonform sind.

Im einzelnen ergibt sich aus Fig. 2 und 3, daß die erste Kammer 21 zwei etwa senkrecht angeordnete zueinander parallele Seitenwände 34, 35, diese verbindende Stirnwände 36, 37 sowie einen Boden 38 aufweist. Die Seitenwände 34 und 35 weisen großflächige Durchbrechungen 45 auf, die von den Membranen 33, mittels Rahmenelementen 39 randdicht verschlossen sind. In Fig. 2 ist die im Bild hintere Membran 33 anschauungshalber nur ausschnittsweise wiedergegeben.

Da die erste Kammer 21 von oben in die das Hilfselektrolytbad bildende zweite Kammer 22 eingetaucht ist, befinden sich Zulaufleitung 41 und Ablaufleitung 42 für die Ver- und Entsorgung der ersten Kammer 21 mit Prozeßelektrolyt 11 im oberen Kammerbereich. Die Zulaufleitung 41 ist im Kammerinneran nach unten geführt und erstreckt sich dort als horizontal in Bodennähe parallel zu den Elektroden 31 angeordnete Verteilanordnung 40 mit Ausströmöffnungen 43 für den Prozeßelektrolyten, der auf diese Weise einen besonders innigen Kontakt zu den Elektroden 31 bekommt. Letztere sind, wie aus Fig. 3 ersichtlich, zweireihig parallel zueinander sowie parallel zu den Membranen 33 angeordnet und mit aus Abstandsspalten bestehenden Prozeßelektrolyt-Durchlaßöffnungen 44 ausgebildet.

Ähnlich sind die in die zweite Kammer 22 eingetauchten Elektroden 32 gestaltet. Sie befinden sich mit Abstand in paralleler Erstreckung zu den Membranen 33, wobei zwischen den Membranen 33 und den Elektroden 31 einerseits sowie den Membranen 33 und den Elektroden 32 andererseits etwa gleichgroße Seitenabstände bestehen.

Ausführungsbeispiel: Mit der in Fig. 1 bis 3 beschriebenen Anlage wurde folgender Langzeitversuch gefahren: Beim Bad 10 handelte es sich um ein galvanisches Bad zum Hartverchromen. Ein Teil des beim Verchromungsprozeß anfallenden dreiwertigen Chroms, sowie das bei der Oxidation von Carbonsäureanionen aus dem Hilfselektrolyten (Membranselektivität < 100 %) entstehende dreiwertige Chrom wird an der Anode in der ersten Kammer der Elektrodialysezelle zu Chromat oxidiert. Die Membranfläche betrug 2 x 410 x 510 cm, insgesamt also 41,8 dm². Die beiden Kathodenbleche mit einer Fläche von je 300 x 440 mm und 77 Löchern à 20 mm Durchmesser wiesen eine Gesamtfläche (je Blech einmal gerechnet) von 43,2 dm² auf.

Als Hilfselektrolyt wurde ein Ansatz von 850 Litern erstellt und diese Menge in der Fig. 1 entsprechenden Weise im Kreislauf geführt. Je 850 Liter wurden 75 kg Malein-Säure (technisch) und 42 kg KOH (technisch) zugesetzt (Rest Wasser). Dadurch stellte sich ein pH-Wert von 4,2 bis 5,7 ein. Dieser konnte durch entsprechende Mehrzugabe von Malein-Säure bzw. KOH sehr fein variiert werden. Die Gleichspannungsstromquelle (10 bis 12 Volt) wurde mit 600 bis 650 Ampere belastet, was einer Flächenbelastung von etwa 15 A/dm² entsprach. In der Elektrodialysezelle betrug die Temperatur 52 bis 56° C. Mit dieser Anordnung wurden Langzeitversuche im Umfang von (bisher) 800.000 Ah gefahren, entsprechend etwa 1.200 Betriebsstunden, ohne daß sich der elektrische Widerstand der Elektrodialysezelle bzw. der pH-Wert des Hilfselektrolyten wesentlich änderten.

## Patentansprüche

1. Verfahren zum elektrodialytischen Regenerieren des Elektrolyten eines galvanischen Bades, eines Beizbades oder dergleichen,
bei dem die Badflüssigkeit (Prozeßelektrolyt) zu ihrer kontinuierlichen Regenerierung in einem geschlossenen Kreislauf durch eine erste Kammer mindestens einer Elektrodialysezelle geführt wird und
die Elektrodialysezelle mindestens aus
der ersten und
einer zweiten, einen Hilfselektrolyten enthaltenden, Kammer,
einer teildurchlässigen, vorzugsweise permselektiven, die erste von der zweiten Kammer trennenden Membran,
einer Anode,
einer Kathode sowie
einer Gleichspannungsstromquelle besteht und
von denen die eine Kammer die Anode und die andere Kammer die Kathode der elektrischen Gleichspannungsstromquelle aufnimmt, wobei
der Hilfselektrolyt in einem geschlossenen Kreislauf durch die erste Kammer geführt wird,
**dadurch gekennzeichnet, daß**
die zweite Kammer als ein die erste Kammer und den Hilfselektrolyten aufnehmendes Bad ausgebildet ist und eine Umwälzung und Durchmischung in der zweiten Kammer vorgesehen ist.

2. Verfahren nach Anspruch 1, dadurch gekennzeichnet, daß als Hilfselektrolyt eine Carbonsäure, insbesondere eine Polycarbonsäure, verwendet wird, die, vorzugsweise, neben Sauerstoff keine weiteren Heteroatome enthält, vorzugsweise Oxal-, Malon-, Malein-, Fumar-, Bernstein-, Apfel-, Cavulin-, Wein-, Zitronen-, Adipin- oder Diglycolsäure.

3. Verfahren nach Anspruch 1 oder 2, dadurch gekennzeichnet, daß der Hilfselektrolyt ein seine elektrische Leitfähigkeit erhöhendes Salz (Leitsalz), insbesondere ausgehend von KOH oder NaOH, enthält.

4. Verfahren nach einem der Ansprüche 1 bis 3, dadurch gekennzeichnet, daß der pH-Wert des Hilfselektrolyten durch Zugabe eines entsprechenden Salzes, insbesondere durch Zugabe von KOH erhöht wird, vorzugsweise auf Werte um 5,0.

5. Verfahren nach einem der Ansprüche 1 bis 4, dadurch gekennzeichnet, daß der Hilfselektrolyt im Kreislauf durch eine Filtrationsanlage, insbesondere einen Bandfilter geführt wird.

6. Verfahren zum elektrodialytischen Reinigen des Elektrolyten eines galvanischen Bades, eines Beizbades oder dergleichen,
bei dem die Badflüssigkeit (Prozeßelektrolyt) zu ihrer kontinuierlichen Regenerierung in einem geschlossenen Kreislauf durch eine erste Kammer mindestens einer Elektrodialysezelle geführt wird und
die Elektrodialysezellen mindestens aus
der ersten und
einer zweiten, einen Hilfselektrolyten enthaltenden, Kammer,
einer teildurchlässigen, vorzugsweise permselektiven, die erste von der zweiten Kammer trennenden Membran,
einer Anode,
einer Kathode sowie
einer Gleichspannungsstromquelle besteht und
von denen die eine Kammer die Anode und die andere Kammer die Kathode der elektrischen Gleichspannungsstromquelle aufnimmt,
**dadurch gekennzeichnet, daß**
der Hilfselektrolyt, zum einen, aus einer Carbonsäure, insbesondere einer Polycarbonsäure, die, vorzugsweise, neben Sauerstoff keine weiteren Heteroatome enthält, vorzugsweise Oxal-, Malon-, Malein-, Fumar-, Bernstein-, Apfel-, Cavulin-, Wein-, Zitronen-, Adipin- oder Diglycolsäure, besteht und der, zum anderen, unter Erhöhung des pH-Wertes der Carbonsäure zwecks Niederschlagens von Verunreinigungen, insbesondere Fremdmetallionen, aus dem Prozeßelektrolyt auf der Elektrode der zweiten, den Hilfselektrolyt enthaltenden Kammer Kaliumhydroxid oder Natriumhydroxid zugesetzt ist, wobei etwa nicht auf dieser Elektrode abgeschiedene Verunreinigungen, insbesondere Fremdmetalle, als Hydroxidschlamm im Hilfselektrolyten anfallen.

7. Verfahren nach Anspruch 6, dadurch gekennzeichnet, daß der pH-Wert des Hilfselektrolyten auf einem Wert um 5,0 gehalten wird.

8. Hilfselektrolyt zur Verwendung in einem Verfahren gemäß Anspruch 6,
**dadurch gekennzeichnet, daß**
er aus einer Mischung aus, einerseits, einer Carbonsäure, insbesondere einer Polycarbonsäure, die, vorzugsweise, neben Sauerstoff keine weiteren Heteroatome enthält, vorzugsweise Oxal-, Malon-, Malein-, Fumar-, Bernstein-, Apfel-, Cavulin-, Wein-, Zitronen-, Adipin- oder Diglycolsäure, und, andererseits, aus Kaliumhydroxid oder Natriumhydroxid besteht und deren pH-Wert, im Vergleich zum pH-Wert der Carbonsäure, derart erhöht ist, daß Verunreinigungen, insbesondere Fremdmetallionen, aus dem Prozeßelektrolyt auf der Elektrode der zweiten, den Hilfselektrolyten enthaltenden Kammer niedergeschlagen werden, wobei etwa nicht auf dieser Elektrode abgeschiedene Verunreinigungen, insbesondere Fremdmetalle, als Hydroxidschlamm im Hilfselektrolyt anfallen.

9. Vorrichtung zum elektrodialytischen Reinigen des Elektrolyten eines galvanischen Bades, eines Beizbades oder dergleichen,
bei dem die Badflüssigkeit (Prozeßelektrolyt 11) zu ihrer kontinuierlichen Regenerierung in einem geschlossenen Kreislauf durch eine erste Kammer (21) mindestens einer Elektrodialysezelle (20) geführt wird und
die Elektrodialysezelle (20) mindestens aus
der ersten und
einer zweiten, einen Hilfselektrolyten (23) enthaltenden, Kammer (22),
einer teildurchlässigen, vorzugsweise permselektiven, die erste von der zweiten Kammer trennenden Membran (33),
einer Anode (31),
einer Kathode (32) sowie
einer Gleichspannungsstromquelle (30) besteht und
von denen die eine Kammer die Anode (31) und die andere Kammer die Kathode (32) der elektrischen Gleichspannungsstromquelle (30) aufnimmt,
**dadurch gekennzeichnet, daß**
die zweite Kammer (22) als ein die erste Kammer (21) und den Hilfselektrolyten (23) aufnehmendes Bad ausgebildet ist und eine Umwälzung und Durchmischung in der zweiten Kammer (22) vorgesehen ist.

10. Vorrichtung nach Anspruch 9, dadurch gekennzeichnet, daß die erste Kammer (21) zwei einander gegenüberliegende Seitenwände (34, 35), zwei die Seitenwände verbindende Stirnwände (36, 37) und einen Boden (38) aufweist und
daß die beiden Seitenwände (34, 35) je eine teildurchlässige Membran (33) aufnehmen.

11. Vorrichtung nach Anspruch 10, dadurch gekennzeichnet, daß Durchlaßöffnungen (44) aufweisende oder bildende Anodenbleche (31) in einer Längsebene zwischen den beiden Membranen und parallel zu diesen angeordnet sind.

12. Vorrichtung nach Anspruch 10 oder 11, dadurch gekennzeichnet, daß Kathodenbleche (32) an jeder Seite der ersten Kammer jeweils mit Abstand von den Membranen (33) und parallel zu diesen angeordnet sind.

## Claims

1. A process for the electrodialytic regeneration of the electrolyte of a galvanic bath, a pickling bath or the like,
in which the bath liquid (process electrolyte) is conveyed in a closed circuit through a first chamber of at least one electrodialysis cell for the continuous regeneration thereof, and
the electrodialysis cell comprises at least the first chamber and
a second chamber containing an auxiliary electrolyte,
a partially permeable, preferably permselective diaphragm which separates the first from the second chamber,
an anode,
a cathode and
a constant-voltage current source, and
of which one chamber receives the anode and the other chamber receives the cathode of the electrical constant-voltage current source, wherein
the auxiliary electrolyte is conveyed in a closed circuit through the first chamber,
**characterized in that** the second chamber is constructed in the form a bath which receives the first chamber and the auxiliary electrolyte, and circulation and thorough mixing are provided in the second chamber.

2. A process according to Claim 1, **characterized in that** the auxiliary electrolyte used is a carboxylic acid, in particular a polycarboxylic acid, which preferably contains, besides oxygen, no additional heteroatoms, preferably oxalic, malonic, maleic, fumaric, succinic, malic, cavulinic, tartaric, citric, adipic or diglycolic acid.

3. A process according to Claim 1 or 2, **characterized in that** the auxiliary electrolyte contains a salt (conducting salt) which increases its electrical conductivity, and in particular based on KOH or NaOH.

4. A process according to one of Claims 1 to 3, **characterized in that** the pH value of the auxiliary electrolyte is increased by adding a suitable salt, in particular by adding KOH, and preferably to values of around 5·0.

5. A process according to one of Claims 1 to 4, **characterized in that** the auxiliary electrolyte is conveyed in the circuit through a filtration plant, in particular a band-pass filter.

6. A process for the electrodialytic cleaning of the electrolyte of a galvanic bath, a pickling bath or the like,
in which the bath liquid (process electrolyte) is conveyed in a closed circuit through a first chamber of at least one electrodialysis cell for the continuous regeneration thereof, and
the electrodialysis cell comprises at least the first chamber and
a second chamber containing an auxiliary electrolyte,
a partially permeable, preferably permselective diaphragm which separates the first from the second chamber,
an anode,
a cathode and
a constant-voltage current source, and
of which one chamber receives the anode and the other chamber receives the cathode of the electrical constant-voltage current source,
**characterized in that** the auxiliary electrolyte on the one hand consists of a carboxylic acid, in particular a polycarboxylic acid, which preferably contains, besides oxygen, no additional heteroatoms, preferably oxalic, malonic, maleic, fumaric, succinic, malic, cavulinic, tartaric citric, adipic or diglycolic acid, and to which [?electrolyte] on the other hand, potassium hydroxide or sodium hydroxide is added, in order to increase the pH value of the carboxylic acid for the purpose of precipitating impurities, in particular foreign-metal ions, from the process electrolyte on the electrode of the second chamber containing the auxiliary electrolyte, wherein any impurities, in particular foreign-metal ions, not deposited on this electrode occur as hydroxide sludge in the auxiliary electrolyte.

7. A process according to Claim 6, **characterized in that** the pH value of the auxiliary electrolyte is maintained at a value of around 5·0.

8. An auxiliary electrolyte for use in a process according to Claim 6, **characterized in that** it consists on the one hand of a carboxylic acid, in particular a polycarboxylic acid, which preferably contains, besides oxygen, no additional heteroatoms, preferably oxalic, malonic, maleic, fumaric, succinic, malic, cavulinic, tartaric, citric, adipic or diglycolic acid, and on the other hand potassium hydroxide or sodium hydroxide, and the pH value of which [?electrolyte] is increased in such a way as compared with the pH value of the carboxylic acid, that impurities, in particular foreign-metal ions, are precipitated from the process electrolyte on the electrode of the second chamber containing the auxiliary electrolyte, wherein any impurities, in particular foreign-metal ions, not deposited on this electrode occur as hydroxide sludge in the auxiliary electrolyte.

9. A device for the electrodialytic cleaning of the electrolyte of a galvanic bath, a pickling bath or the like,
in which the bath liquid (process electrolyte 11) is conveyed in a closed circuit through a first chamber (21) of at least one electrodialysis cell (20) for the continuous regeneration thereof, and
the electrodialysis cell (20) comprises at least the first chamber and
a second chamber (22) containing an auxiliary electrolyte (23),
a partially permeable, preferably permselective diaphragm (33) which separates the first from the second chamber,
an anode (31),
a cathode (32) and
a constant-voltage current source (30), and
of which one chamber receives the anode (31) and the other chamber receives the cathode (32) of the electrical constant-voltage current source (30),
**characterized in that** the second chamber (22) is constructed in the form of a bath which receives the first chamber (21) and the auxiliary electrolyte (23), and circulation and thorough mixing are provided in the second chamber (22).

10. A device according to Claim 9, **characterized in that** the first chamber (21) comprises two mutually opposite lateral walls (34, 35), two end walls (36, 37) joining the lateral walls, and a base (38), and
the two lateral walls (34, 35) each receive a partly permeable diaphragm (33).

11. A device according to Claim 10, **characterized in that** anode plates (31) comprising or forming through openings (44) are arranged in a longitudinal plane between the two diaphragms and parallel thereto.

12. A device according to Claim 10 or 11, **characterized in that** cathode plates (32) are arranged on each side of the first chamber at a distance in each case from the diaphragms (33) and parallel thereto.

## Revendications

1. Procédé pour la régénération électrodialytique de l'électrolyte d'un bain galvanique, d'un bain de dérochage ou similaire,
dans lequel le liquide du bain (électrolyte de processus), en vue de sa regénération en continu, est amené, en circuit fermé, à travers une première chambre d'au moins une cellule d'électrodialyse et
la cellule d'électrodialyse se composant au moins
d'une première et
d'une seconde chambre contenant un électrolyte auxiliaire,
d'une membrane partiellement perméable, de préférence sélectivement perméable, qui sépare la première de la seconde chambre,
d'une anode,
d'une cathode ainsi
que d'une source de courant de tension continue et
dont la première chambre reçoit l'anode et l'autre chambre la cathode de la source électrique de courant de tension continu,
l'électrolyte auxiliaire étant amené, en circuit fermé, à travers la première chambre,
caractérisé en ce que
la seconde chambre fait office de bain recevant la première chambre et l'électrolyte auxiliaire et en ce qu'il est prévu un renversement et un mélange dans la seconde chambre.

2. Procédé selon la revendication 1, caractérisé en ce qu'en tant qu'électrolyte auxiliaire, il est utilisé un acide carboxylique, en particulier un acide polycarboxylique, qui ne contient de préférence, outre de l'oxygène, pas d'autre hétéroatome, de préférence un acide oxalique, malonique, maléique, fumarique, succinique, malique, cavulique, tartrique, citrique, adipique ou diglycolique.

3. Procédé selon la revendication 1 ou 2, caractérise en ce que l'électrolyte auxiliaire comporte un sel (sel conducteur) qui augmente sa conductibilité électrique, en particulier à partir de KOH ou NaOH.

4. Procédé selon l'une des revendications 1 à 3, caractérisé en ce que la valeur de pH de l'électrolyte auxiliaire est augmentée par l'apport d'un sel correspondant, en particulier par apport de KOH, de préférence à des valeurs d'environ 5,0.

5. Procédé seion l'une des revendications 1 à 4, caractérisé en ce que l'électrolyte auxiliaire est guidé en circuit fermé à travers une installation de filtrage en particulier un filtre passe-bande.

6. Procédé pour la purification électrodialytique de l'électrolyte d'un bain galvanique, d'un bain de dérochage ou similaire,
dans lequel le liquide du bain (électrolyte de processus), en vue de sa régénération en continu, est amené en circuit fermé à travers une première chambre d'au moins une cellule d'électrodialyse et
la cellule d'électrodialyse se composant au moins
d'une première et
d'une seconde chambre contenant un électrolyte auxiliaire,
d'une membrane partiellement perméable, de préférence sélectivement perméable, qui sépare la première de la seconde chambre,
d'une anode,
d'une cathode ainsi
que d'une source de courant de tension continue et
dont la première chambre reçoit l'anode et l'autre chambre la cathode de la source électrique de courant de tension continu,
caractérisé en ce que, d'autre part,
l'électrolyte auxiliaire se compose d'un acide carboxylique, en particulier d'un acide polycarboxylique, qui ne contient de préférence, outre de l'oxygène, pas d'autre hétéroatome, de préférence un acide oxalique, malonique, maléique, fumarique, succinique, malique, cavulique, tartrique, citrique, adipique ou diglycolique, d'autre part, l'électrolyte auxiliaire, en augmentant la valeur de pH de l'acide carboxylique dans un but de la précipitation d'impuretés, en particulier d'ions métalliques étrangers, est ajouté, à partir de l'électrolyte de processus, sur l'électrode de la seconde chambre contenant l'électrolyte auxiliaire, à l'hydroxyde de calium ou à l'hydroxyde de sodium, des impuretés, en particulier des métaux étrangers, qui ne se précipitent pas sur cette électrode, se retrouvant dans l'électrolyte auxiliaire comme boue d'hydroxyde.

7. Procédé selon la revendication 6, caractérisé en ce que la valeur de pH de l'électrolyte auxiliaire est maintenue à une valeur de 5,0.

8. Electrolyte auxiliaire pour l'utilisation dans un procédé conforme à la revendication 6, caractérisé en ce qu'il se compose d'un mélange d'une part d'acide carboxylique, en particulier d'acide polycarbonique, qui ne contient de préférence, outre de l'oxygène, pas d'autre hétéroatome, de préférence un acide oxalique, malonique, maléique, fumarique, succinique, malique, cavulique, tartrique, citrique, adipique ou diglycolique et d'autre part d'hydroxyde de calium ou de sodium et dont la valeur de pH, comparée à la valeur de pH de l'acide carboxylique est augmentée de sorte que des impuretés, en particulier des ions métalliques étrangers, provenant de l'électrolyte de processus, soient précipités sur l'électrode de la seconde chambre contenant l'électrolyte auxiliaire, les impuretés, en particulier des métaux étrangers, qui ne se précipitent pas sur cette électrode, se retrouvant dans l'électrolyte auxiliaire comme boue d'hydroxyde.

9. Dispositif pour la purification électrodialytique de l'électrolyte d'un bain galvanique, d'un bain de dérochage ou similaire,
dans lequel le liquide du bain (électrolyte de processus 11) en vue de sa régénération en continu, est amené, en circuit fermé, à travers une première chambre (21) d'au moins une cellule d'électrodialyse (20) et
la cellule d'électrodialyse (20) se composant au moins
d'une première et
d'une seconde chambre (22) contenant un électrolyte auxiliaire (23),
d'une membrane (33) partiellement perméable, de préférence sélectivement perméable, qui sépare la première de la seconde chambre,
d'une anode (31),
d'une cathode (32) ainsi
que d'une source de courant de tension continue (30) et
dont la première chambre reçoit l'anode (31) et l'autre chambre la cathode (32) de la source électrique de courant de tension continu (30),
caractérisé en ce que
la seconde chambre (22) fait office de bain recevant la première chambre (21) et l'électrolyte auxiliaire (23) et en ce qu'il est prévu un renversement et un mélange dans la seconde chambre (22).

10. Dispositif selon la revendication 9, caractérisé en ce que la première chambre (21) présente deux parois latérales (34, 35) opposées, deux parois frontales (36, 37) reliant les parois latérales et un fond (38) et
en ce que les deux parois latérales (34, 35) logent chacune une membrane (33) partiellement perméable.

11. Dispositif selon la revendication 10, caractérisé en ce que des tôles d'anode (31), formant ou présentant des trous de passages (44), sont disposées dans un plan longitudinal entre les deux membranes et parallèlement à ces dernières.

12. Dispositif selon la revendication 10 ou 11, caractérisé en ce que des tôles de cathode (32) sont disposées de chaque côté de la première chambre respectivement à distance des membranes (33) et parallèlement à ces dernières.
